# EUROPÄISCHE PATENTSCHRIFT

(11) **EP 2 908 712 B1**
(45) Veröffentlichungstag und Bekanntmachung des Hinweises auf die Patenterteilung: **06.07.2016**
(21) Anmeldenummer: 14755651.8
(22) Anmeldetag: 22.08.2014
(51) Int. Cl.: A47L 15/00, A47L 15/46

(54) **VERFAHREN ZUM SPÜLEN VON SPÜLGUT SOWIE PROGRAMMAUTOMAT**
METHOD FOR WASHING ITEMS TO BE WASHED, AND PROGRAMMED MACHINE
PROCÉDÉ PERMETTANT DE LAVER UN ARTICLE À LAVER ET UN AUTOMATE DE PROGRAMMATION

(30) Priorität: 23.10.2013 DE 102013111670
(43) Veröffentlichungstag der Anmeldung: 26.08.2015
(73) Patentinhaber: WINTERHALTER GASTRONOM GMBH, 88074 Meckenbeuren (DE)
(72) Erfinder: DUDEN, Roman, 88048 Friedrichshafen (DE); LEHMANN, Bernd, 88477 Schwendi (DE)
(74) Vertreter: Appelt, Christian W.
(86) Internationale Anmeldenummer: PCT/EP2014/067879
(87) Internationale Veröffentlichungsnummer: WO 2015/058882

(56) Entgegenhaltungen:
- EP-A1- 2 192 370
- DE-A1- 3 048 268

## Beschreibung

Die vorliegende Erfindung betrifft ein Verfahren zum Spülen von Spülgut in einem Programmautomaten sowie einen Programmautomaten zum Spülen von Spülgut, insbesondere zum Durchführen eines solchen Verfahrens.

Eine Geschirrspülmaschine in Form eines Programmautomaten und ein entsprechendes Verfahren zum Spülen von Geschirr sind beispielsweise aus der EP 2 072 000 A1 bekannt.

Ferner ist aus der EP 2 192 370 A1 ein Verfahren zum Spülen von Spülgut in einer Spülzone eines Programmautomaten bekannt, der eine Wärmepumpenvorrichtung aufweist.

Aus der DE 30 48 268 A1 ist ferner eine Wärmerückgewinnungseinrichtung für Geschirrspülmaschinen bekannt, die eine Wärmepumpe umfasst.

Im Gegensatz zu Spülmaschinen mit Transportmaschinen wie beispielsweise Band- und Korbtransportmaschinen umfassen Programmautomaten im Sinne dieser Erfindung Geschirrspülmaschinen, bei denen ein Spülgutträger, insbesondere ein Korb, manuell wahlweise in die Maschine eingegeben und aus ihr herausgenommen werden kann, beispielsweise über eine Fronttür oder - bei Korbdurchschubmaschinen - über eine Tischzuführung.

Bei diesen als Programmautomaten bezeichneten Maschinentypen erfolgt die Vorabräumung vollständig manuell außerhalb der Maschine. Die verschiedenen Programmablaufschritte wie beispielsweise die Reinigerumwälzung und die Klarspülung erfolgen zeitlich aufeinander folgend, aber nicht räumlich getrennt, in einer Spülzone. Als solch eine Spülzone wird ein Raum oder Bereich im Programmautomaten verstanden, in dem das Spülgut gereinigt wird. Im Falle eines Programmautomaten mit Spülhaube ist also der Bereich unter der Haube als Spülzone, im Falle eines Programmautomaten mit Fronttür ist die Kammer hinter der Tür als Spülzone zu verstehen.

Das Spülgut trocknet bevorzugt nach Entnahme des Spülgutträgers auch außerhalb der Maschine.

Hiervon strikt zu unterscheiden sind die oben genannten Spülmaschinen mit Transportsystemen, bei denen das Spülgut automatisch nacheinander angeordnete Zonen, in denen die einzelnen Funktionsabläufe erfolgen, durchlaufen. Bei solchen Spülmaschinen mit Transportsystemen wird in der Regel zwischen sogenannten Korbtransportmaschinen, bei denen mit Spülgut beschickte Körbe automatisch durch die Maschine transportiert werden, und sogenannten Bandtransportmaschinen unterschieden, bei denen das Spülgut direkt in ein Endlosband eingestellt und automatisch durch die Maschine transportiert wird.

Unter einem "Spülvorgang" eines Programmautomaten im Sinne dieser Erfindung ist ein kompletter Behandlungsvorgang eines Programmautomaten zu verstehen. Ein solcher Spülvorgang kann einen oder mehrere Spülprozesse, beispielsweise ein Vorspülen und ein Hauptspülen und/oder ein Nachspülen umfassen, ein Spülvorgang kann aber auch nur einen einzigen Spülprozess aufweisen. Ferner kann ein Spülvorgang neben einem oder mehreren Spülprozessen auch einen Trocknungsprozess aufweisen.

Ein Spülvorgang im Sinne dieser Erfindung kann also aus einem oder mehreren zeitlich aufeinanderfolgenden Prozessen bestehen.

Betrachtet man eine Geschirrspülmaschine im Hinblick auf die energetischen Gegebenheiten, so wird der Geschirrspülmaschine elektrische Energie zugeführt, die zu einem großen Anteil in thermische Energie umgewandelt wird, primär durch das Erhitzen von Spülwasser. Dieses überträgt dann die Energie an das Spülgut und an das Maschinengehäuse. Das Gehäuse gibt wiederum einen Teil der thermischen Energie nach außen ab.

Beim Öffnen einer als Programmautomat ausgebildeten Maschine, also beim Öffnen einer Spülzone, beispielsweise durch Heben einer Haube, entweicht feuchte und warme Luft aus dem Inneren der Maschine. Das Spülgut, das der Spülzone entnommen wird, gibt ebenfalls noch Wärmeenergie und zum Teil Feuchte an den Raum ab.

Auf diese Weise wird zum einen das Raumklima in der Umgebung des Programmautomaten nachteilig beeinflusst, zum anderen geht die abgegebene Wärmeenergie für eine effizienten Nutzung verloren.

Es ist eine Aufgabe der vorliegenden Erfindung, ein verbessertes Verfahren zum Spülen von Spülgut und einen verbesserten Programmautomaten zur Verfügung zu stellen.

Diese Aufgabe wird durch ein Verfahren gemäß Anspruch 1 und einen Programmautomaten gemäß Anspruch 9 gelöst. Die Ansprüche 2 bis 8 betreffen besonders vorteilhafte Ausgestaltungen des erfindungsgemäßen Verfahrens, die Ansprüche 10 bis 23 betreffen besonders vorteilhafte Ausführungsformen des erfindungsgemäßen Programmautomaten.

Ein erfindungsgemäßes Verfahren und eine Geschirrspülmaschine in Form eines Programmautomaten gemäß der vorliegenden Erfindung haben mannigfaltige Vorteile gegenüber den Verfahren und den Programmautomaten gemäß dem Stand der Technik:
Das erfindungsgemäße Verfahren sowie der erfindungsgemäße Programmautomät setzen eine Wärmepumpenvorrichtung kontinuierlich ein, die sowohl während mehrerer Spülvorgänge als auch während mindestens eines zwischen je zwei Spülvorgängen liegenden Unterbrechungszeitraums zur manuellen Eingabe und zum manuellen Entnehmen von Spülgut arbeitet. Entsprechend einer (aus mindestens zwei Einstellungsmöglichkeiten ausgewählten) Einstellung einer Umschalt- oder Regelungsvorrichtung wird dabei aus der Spülzone Luft und/oder Wrasen angesaugt und der Wärmepumpenvorrichtung zugeführt; alternativ oder zusätzlich wird Luft aus der Umgebung des Programmautomaten angesaugt und der Wärmepumpenvorrichtung zugeführt. Die Umschalt- oder Regelungsvorrichtung kann dabei derart ausgebildet sein, dass nur zwei Einstellungen möglich sind, nämlich einerseits diejenige, derzufolge Luft und/oder Wrasen ausschließlich aus dem Spülraum angesogen wird und andererseits die, derzufolge Luft ausschließlich aus der Umgebung des Programmautomaten angesaugt wird. Die Umschalt- oder Regelungsvorrichtung kann aber zusätzlich auch eine oder mehrere Zwischeneinstellungen ermöglichen, gemäß denen zugleich Luft (und/oder Wrasen) aus der Spülkammer und Luft aus der Umgebung angesogen wird, so dass ein Gemisch aus beiden der Wärmepumpenvorrichtung zugeführt wird.

Die Einstellung kann manuell durch einen Anwender oder intern von einer Steuerung ausgewählt werden oder bereits im Vorhinein ausgewählt worden sein.

Der kontinuierliche Einsatz der Wärmepumpenvorrichtung hat den Vorteil, dass das Verfahren und der Programmautomat gemäß der vorliegenden Erfindung energetisch sehr günstig sind. Ferner wird die Abgabe von feuchter, warmer Luft an den den Programmautomaten umgebenden Raum minimiert, was das Raumklima deutlich verbessert, je nach Betriebszustand wird der den Programmautomaten umgebende Raum sogar aktiv gekühlt und/oder sogar klimatisiert. Darüber hinaus läuft die Wärmepumpenvorrichtung über einen längeren Zeitraum, insbesondere über mehrere Spülvorgänge und, bevorzugt, auch über mehrere zwischen je zwei Spülvorgängen liegenden Unterbrechungszeiträumen, was die Lebensdauer der Wärmepumpenvorrichtung deutlich erhöht.

In diesem Zusammenhang ist festzuhalten, dass Wärmepumpenvorrichtungen nur sehr schlecht dazu geeignet sind, regelmäßig ein- und wieder ausgeschaltet zu werden, weil hierbei zum einen ihr Wirkungsgrad sinkt, zum anderen ihre Lebensdauer, die teilweise von der Anzahl der Ein- und Ausschaltzyklen abhängt, stark reduziert wird.

Aus diesem Grunde wurden solche Wärmepumpenvorrichtungen, die an sich zwar bekannt sind, nicht in als Programmautomaten ausgebildeten Geschirrspülvorrichtungen eingesetzt, vielmehr hat der Fachmann bewusst vermieden, bei solchen Programmautomaten Wärmepumpenvorrichtungen vorzusehen.

Erst mit einem erfindungsgemäßen Verfahren und einem erfindungsgemäßen Programmautomaten, bei denen die Wärmepumpenvorrichtung kontinuierlich über einen längeren Zeitraum eingesetzt wird, können die vorteilhaften Wirkungen einer Wärmepumpenvorrichtung auch in einem solchen Verfahren bzw. bei einem solchen Programmautomaten sinnvoll verwendet werden. Das Vorurteil des Fachmanns, dass Wärmepumpenvorrichtungen bei Programmautomaten nicht eingesetzt werden können, kann daher durch diese Erfindung ausgeräumt werden.

Es ist ein Vorteil der vorliegenden Erfindung, dass bei einem Programmautomaten, der manuell mit Spülgut bestückt wird, bei dem es sich also um eine diskontinuierlich arbeitende Geschirrspülmaschine handelt, bei der darüber hinaus die zeitliche Abfolge und die Pausen zwischen einzelnen Spülvorgängen je nach Nutzung zum Teil stark unterschiedlich sind, eine Wärmepumpenvorrichtung kontinuierlich eingesetzt und betrieben wird. Diese wird erfindungsgemäß also insbesondere auch in einem Unterbrechungszeitraum betrieben, also in einem Zeitraum, in dem der Programmautomat nicht spült bzw. in einem Zeitraum, in dem gereinigtes Spülgut aus dem Programmautomaten entnommen oder neues Spülgut in den Programmautomaten eingebracht wird.

Dadurch, dass das Ansaugen aus Spülkammer und/oder Umgebung entsprechend einer Einstellung der Umschalt- oder Regelungsvorrichtung vorgenommen wird, wird ein flexibler Betrieb der Wärmepumpenvorrichtung und damit dessen Anpassung an jeweils aktuelle Bedingungen ermöglicht, wie sie beispielsweise durch die Umgebung des Programmautomaten und/oder durch dessen Verwendung bestimmt sind. So kann die Effizienz der Wärmepumpenvorrichtung optimiert werden.

Insbesondere ist es möglich, dem Luft- bzw. Massenstrom nach Durchlauf der Wärmepumpenvorrichtung und vor Abgabe an die Umgebung als Abluft zusätzlich Luft aus der Umgebung in einem bestimmbaren Anteil zuzumischen, so dass erst die dann erzeugte "Mischluft" als Abluft an die Umgebung abgegeben wird.

Dies hat den Vorteil, dass das Verfahren bzw. der Programmautomat flexibel und bevorzugt automatisch an die jeweiligen Gegebenheiten angepasst werden kann, was die oben beschriebenen Vorteile noch deutlich verstärkt.

Die Einstellung der Umschalt- oder Regelungsvorrichtung (und damit die einzelnen, oben beschriebenen Betriebsmodi) können in Abhängigkeit von den einzelnen Spül- oder Trocknungsprozessen innerhalb eines Spülvorganges und/oder in Abhängigkeit von einer Abfolge von Spülvorgängen und Unterbrechungszeiträumen und/oder in Abhängigkeit von der Betätigung einer Spülhaube bzw. einer Fronttür eines Programmautomaten geregelt werden.

Bestimmende Parameter für die Einstellung der Umschalt- oder Regelungsvorrichtung können unter anderem ein Spülprogramm, eine Ausblastemperatur von Abluft des Programmautomaten, ein relativer und/oder absoluter Feuchtigkeitsgehalt dieser Abluft oder der Umgebungsluft und/oder eine Umgebungstemperatur sein. Beispielsweise kann die Einstellung bei einer großen Temperaturdifferenz zwischen Ausblas- und Umgebungsluft (z.B. bei einer Differenz von 30°C oder mehr) so gewählt sein, dass ausschließlich Luft und/oder Wrasen aus der Spülzone angesaugt wird, oder dass (möglicherweise in Abhängigkeit von weiteren Parametern) der Anteil an aus der Spülzone angesogener Luft in der der Wärmepumpenvorrichtung zugeführten Luft (oder dem Luft-Wrasen-Gemisch) mindestens 75% beträgt.

Alternativ oder zusätzlich kann die Einstellung davon bestimmt sein, dass die Spülkammer geöffnet oder geschlossen ist, und/ oder dass sie leer oder beladen ist.

Vorzugsweise erfolgt die Auswahl der Einstellung anhand der bestimmenden Parameter automatisch durch eine Steuerung. Ein oder mehrere der bestimmenden Parameter können dabei durch Sensoren erfasst und der Steuerung übermittelt werden.

In einer vorteilhaften Ausführungsform wird die Einstellung während des Betriebszeitraums, vorzugsweise während des Unterbrechungszeitraums zwischen zwei Spülvorgängen einmal oder mehrere Male geändert. Dadurch kann der Anteil an Umgebungsluft in der angesaugten und der Wärmepumpenvorrichtung zugeführten Luft variiert werden. Vorzugsweise wird die mindestens eine Änderung durch eine Steuerung eingeregelt, die auch einen Zeitpunkt für eine solche Änderung bestimmen kann.

Ein solcher Zeitpunkt für eine Änderung der Einstellung kann ebenfalls abhängig vom Spülprogramm, von einer Ausblastemperatur von Abluft des Programmautomaten, einem relativen und/oder absoluten Feuchtigkeitsgehalt dieser Abluft oder der Umgebungsluft und/oder von einer Umgebungstemperatur sein, oder auch davon, ob die Spülzone geöffnet oder geschlossen ist und/oder leer oder beladen. So kann beispielsweise ein Zeitpunkt, zu dem die Einstellung nach Beginn des Unterbrechungszeitraumes von einem ausschließlichen Ansaugen von Spülkammerluft so geändert wird, dass zusätzlich Umgebungsluft angesaugt wird, davon abhängig sein, ob oder wann die Spülzone geöffnet wird.

Vorzugsweise ist die Einstellung der Umschalt- oder Regelungsvorrichtung während des Betriebszeitraums wenigstens einmal so, dass gleichzeitig sowohl Luft und/oder Wrasen aus der Spülzone als auch Luft aus der Umgebung des Programmautomaten angesaugt und der Wärmepumpenvorrichtung zugeführt wird.

Bei einer bevorzugten Ausgestaltung des erfindungsgemäßen Verfahrens wird Luft und/oder Wrasen aus einer Spülzone des Programmautomaten angesaugt, wobei dies insbesondere oder sogar nur während des Trocknungsprozesses geschehen kann. Es ist jedoch prinzipiell auch möglich, dass das Ansaugen von Luft und/oder Wrasen aus der Spülzone auch zumindest teilweise während eines Spülprozesses innerhalb eines Spülvorganges geschieht. Ferner wird bei einer besonders bevorzugten Ausführungsform Luft und/oder Wrasen zumindest über einen festgelegten Zeitraum nach Beendigung eines Trocknungsprozesses und damit nach Beendigung eines Spülvorganges durchgerührt.

Zusätzlich oder alternativ wird bei einer bevorzugten Ausführungsform des Verfahrens Luft aus einem Umgebungsbereich des Programmautomaten abgesaugt, wobei entsprechende Absaugvorrichtungen bevorzugt in der Nähe des Programmautomaten oder sogar in den Programmautomaten integriert vorgesehen sind.

Bei einem besonders bevorzugten Verfahren wird Luft und/oder Wrasen auch nach Beendigung eines (kompletten) Spülvorganges zumindest über eine vorbestimmte Dauer t₁ > 0 aus der Spülzone angesaugt. Die Dauer t₁ kann in einem Bereich von 10 Sekunden bis zu ca. 5 Minuten, bevorzugt in einem Bereich von 10 Sekunden bis ca. einer Minute liegen. Dies ermöglicht ein besonders effektives Ansaugen von Luft und/oder Wrasen in den Zeitbereichen, in denen in hohem Ausmaße Wärme und/oder Feuchtigkeit erzeugt bzw. abgegeben wird. Die Dauer kann von einem oder mehreren der oben genannten bestimmenden Parameter abhängen.

Bei einem besonders bevorzugten Verfahren wird eine Mindestlaufzeit t₂ für die Wärmepumpenvorrichtung festgelegt. Dadurch wird selbst bei einem unregelmäßigen Betreiben des Programmautomaten, insbesondere bei längeren Pausen während der Nutzung des Programmautomaten, beispielsweise bei wechselndem Aufkommen von verschmutztem Spülgut, ein zu häufiges An- und Ausschalten der Wärmepumpenvorrichtung vermieden und so die Lebensdauer der Wärmepumpenvorrichtung erhöht. Die Mindestlaufzeit t₂ beträgt bevorzugt mindestens 10 Minuten, besonders bevorzugt mindestens 20 Minuten, und bei einer besonders bevorzugten Ausführung des Verfahrens mindestens 30 Minuten oder sogar eine Stunde.

In Bezug auf einen Programmautomaten gemäß der vorliegenden Erfindung wird zur Vermeidung von Wiederholungen insbesondere auf die oben beschriebenen Merkmale und Eigenschaften des Verfahrens, die auch mit dem erfindungsgemäßen Programmautomaten umgesetzt werden, vollumfänglich verwiesen.

Bei einer besonders bevorzugten Ausführungsform des erfindungsgemäßen Programmautomaten wird die Umschalt- oder Regelungsvorrichtung durch eine Umschalt- oder Einstellklappe realisiert, die zwischen mindestens zwei Stellungen beweglich ist. Auf diese Weise wird eine Umschalt- oder Regelungsvorrichtung auf sehr kostengünstige und sehr sichere Weise verwirklicht. Die Umschaltklappe kann dabei eine der beiden (End-) Stellungen einnehmen, aber auch so gesteuert sein, dass sie im Wesentlichen beliebige Zwischenstellungen einnehmen kann, so dass beispielsweise die Anteile von "Maschinenluft" und "Umgebungsluft" frei steuerbar sind.

Die Umschalt- oder Regelungsvorrichtung, insbesondere die Umschalt- oder Einstellklappe, ist bei einer bevorzugten Ausführungsform automatisch, beispielsweise mittels Software, gesteuert, wobei die Steuerung in Abhängigkeit von den oben genannten bestimmenden Parametern einstellbar ist, zu denen beispielsweise auch ein Betriebszustand des Programmautomaten und/oder eine Position einer Fronttür oder einer Haube, die die Spülzone zugänglich macht bzw. verschließt, gehören kann bzw. können.

Die Umschalt- oder Regelungsvorrichtung kann daher auf besonders vorteilhafte Weise an die einzelnen Programme des Programmautomaten einerseits, aber auch an die Bedienung durch den Nutzer andererseits angepasst werden.

Die Wärmepumpenvorrichtung kann in ein Gehäuse des Programmautomaten integriert sein. Alternativ kann die Wärmepumpenvorrichtung als vom Programmautomaten separates Aggregat vorliegen oder zumindest ein oder mehrere vom Programmautomaten getrennte Komponenten aufweisen. Die Wärmepumpenvorrichtung kann dann einen oder mehrere Adapter zum Anschluss an den Programmautomaten umfassen. So kann die Wärmepumpenvorrichtung beispielsweise auf ein Gehäuse des Programmautomaten aufgesetzt, über ihm an einer Wand befestigt oder neben ihm aufgestellt werden. Dies hat den Vorteil, dass der Programmautomat von seinen Ausmaßen her nicht beeinflusst wird und auch nicht stabiler gemacht werden muss. Eine derart separate Wärmepumpenvorrichtung kann auch die oben beschriebene Umschalt- oder Regelungsvorrichtung mitsamt deren Steuerung umfassen, mit der automatisch (z.B. in Abhängigkeit von den erwähnten bestimmenden Parametern) geregelt werden kann, ob Luft aus der Spülzone oder aus der Umgebung oder beides angesogen wird und gegebenenfalls in welchen Anteilen. Damit kann die Wärmepumpenvorrichtung auch ein optional zu verwendendes Zusatzaggregat zum Programmautomaten darstellen.

Bei einer besonders bevorzugten Ausführungsform des Verfahrens bzw. des Programmautomaten wird die Temperatur und/oder die relative und/oder die absolute Feuchtigkeit einer Abluft des Programmautomaten gemessen, beispielsweise mittels eines oder mehrerer Sensoren, die in dem Bereich eines Programmautomaten angeordnet sind, in dem die Abluft an die Umgebung abgegeben wird.

Bevorzugt werden die Messwerte dieser Sensoren dazu verwendet, die Umschalt- oder Regelungsvorrichtung zu steuern bzw. den Anteil der Luft und/oder des Wrasen aus der Spülzone einerseits und der Luft aus dem Umgebungsbereich des Programmautomaten andererseits einzustellen.

Diese und weitere Merkmale und Vorteile der vorliegenden Erfindung werden anhand der nachfolgenden Zeichnungen, die besonders vorteilhafte Ausführungsformen der Erfindung zeigen, noch deutlicher. Es zeigen:
- Fig. 1: schematisch eine Seitenansicht einer ersten Ausführungsform eines erfindungsgemäßen Programmautomaten in einer geschlossenen Stellung;
- Fig. 2: den in Fig. 1 gezeigten Programmautomaten in geöffneter Stellung;
- Fig. 3: schematisch eine erste Ausführungsform einer Wärmepumpenvorrichtung eines erfindungsgemäßen Programmautomaten;
- Fig. 4: schematisch ein Kreislaufsystem eines erfindungsgemäßen Programmautomaten;
- Fig. 5: ein Beispiel einer Steuerung eines Einstellwinkels einer Umschalt- bzw. Einstellklappe eines erfindungsgemäßen Programmautomaten; und
- Fig. 6: ein Mollierdiagramm, das ein Beispiel für die Prozesse Mischen - Kühlen - Mischen darstellt, wie es gemäß des erfindungsgemäßen Verfahrens und mit einer erfindungsgemäßen Vorrichtung realisiert werden kann.

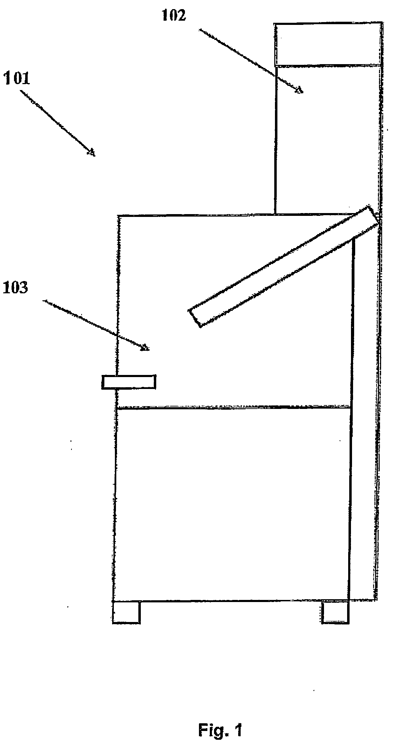

Fig. 1 zeigt schematisch eine erste Ausführungsform eines erfindungsgemäßen Programmautomaten 101 in Seitenansicht, wobei dieser Programmautomat 101 eine Haube 103 sowie eine Wärmepumpenvorrichtung 102 umfasst.

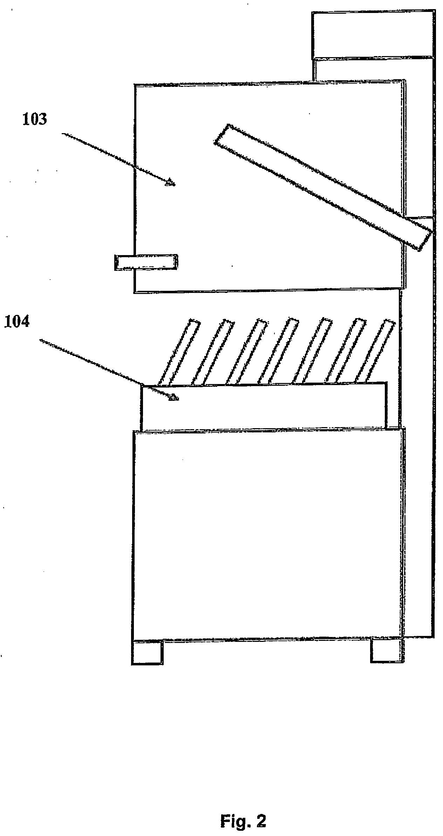

Die in Fig. 2 dargestellte Haube 103 des Programmautomaten 101 ist vertikal verschiebbar. So wird eine Spülzone definiert, die bei der in Fig. 2 gezeigten geöffneten Stellung zugänglich ist. In der Spülzone kann Spülgut, hier in einem Spülgutträger 104, in die Spülzone eingesetzt werden.

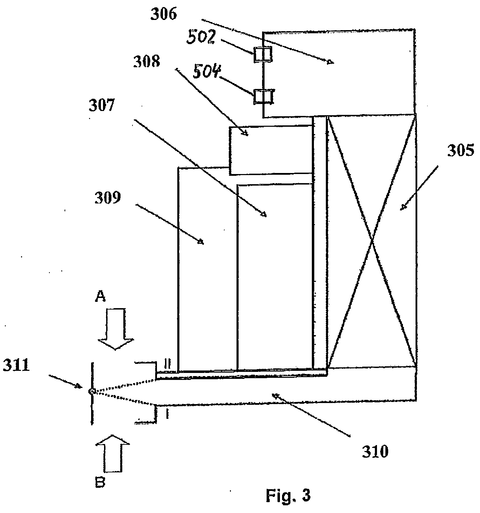

Fig. 3 zeigt schematisch eine Wärmepumpenvorrichtung, wie sie insbesondere in einem Programmautomaten, wie er in den Figuren 1 und 2 schematisch gezeigt ist, verwendet werden kann. Wie insbesondere den Figuren 1 und 2 zu entnehmen ist, ist eine solche Wärmepumpenvorrichtung bevorzugt in einem oberen, hinteren Bereich des Programmautomaten untergebracht.

Die besonders bevorzugte Ausführungsform der Wärmepumpenvorrichtung, wie sie in Fig. 3 gezeigt ist, umfasst einen Verdampfer 305, einen Lüfter 306, einen Kondensator 307, einen Schaltkasten 308, einen Verdichter 309, einen Luftkanal 310 und eine Umschalt- oder Einstellklappe 311, die so ausgebildet ist, dass sie zwischen zwei Betriebspositionen I und II hin- und hergeschaltet werden kann. Ferner ist es möglich, die Umschalt- oder Einstellklappe 311 auf Zwischenpositionen einzustellen, so dass gleichzeitig sowohl "Maschinenluft" als auch Umgebungsluft in einem bestimmbaren Anteil zugeführt werden können.

Im Betrieb der besonderen Ausführungsform des dargestellten Programmautomaten wird Luft und/oder Wrasen entweder aus der Spülzone des Programmautomaten abgesaugt, wenn sich die Umschalt- oder Einstellklappe 311 in der Stellung II befindet. Die Luft und/oder der Wrasen, der dann in die Wärmepumpenvorrichtung eingesaugt wird, ist mit dem Pfeil B gekennzeichnet.

Die Luft und/oder der Wrasen wird durch den Luftkanal 310 über den Verdampfer 305 geführt und dort gekühlt und getrocknet. Über den Lüfter 306 wird die Luft und/oder der Wrasen dann der Umgebung zugeführt. Es besteht ferner die Möglichkeit, vor dem Lüfter durch Zumischen von Umgebungsluft die relative Feuchte zu reduzieren und die Temperatur etwas anzuheben.

In der Stellung I der Umschalt- oder Einstellklappe 311 wird Luft und/oder (bereits ausgetretener) Wrasen bzw. angefeuchtete Luft aus der Umgebung des Programmautomat angesaugt, dies ist mit dem Pfeil A dargestellt.

Alternativ gibt es für die Umschalt- oder Einstellklappe auch eine oder mehrere Zwischenstellungen, in denen sowohl Luft aus der Spülzone des Programmautomaten als auch Luft aus der Umgebung angesaugt und der Wärmepumpenvorrichtung zugeführt wird.

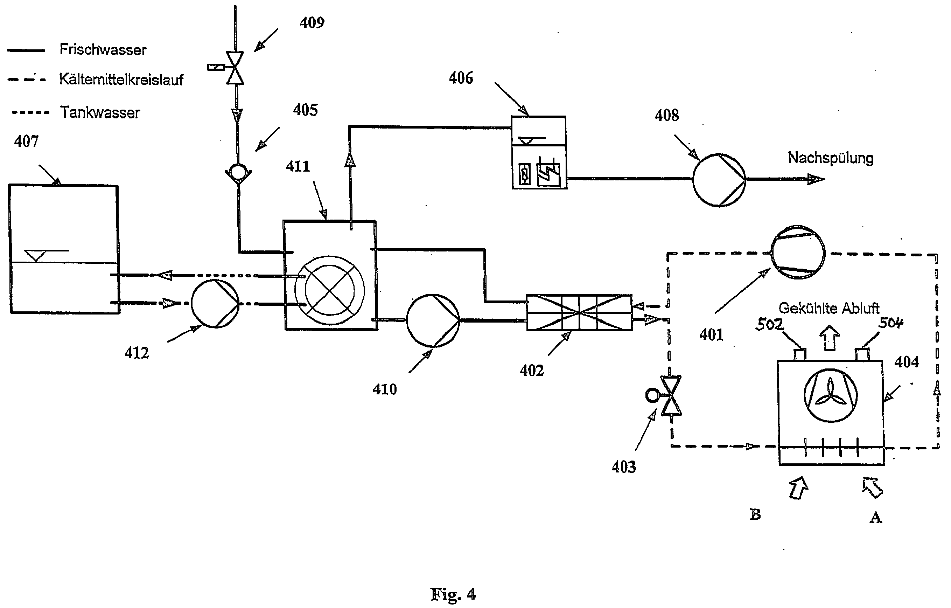

Fig. 4 zeigt schematisch Teile eines Aufbaus einer Ausführungsform eines erfindungsgemäßen Programmautomaten. Die in Fig. 4 dargestellte Ausführungsform eines Programmautomaten umfasst einen Verdichter 401, einen als Platten-Wärmetauscher ausgebildeten Kondensator 402, ein Expansionsventil 403, einen als LamellenWärmetauscher ausgebildeten Verdampfer 4 mit Lüfter, eine wassertechnische Sicherungseinrichtung 405, einen Boiler 406, einen Waschtank 407, eine Nachspülpumpe 408, ein Zulaufmagnetventil 409, eine erste Umwälzpumpe 410, einen Wärmetauscher 411 und eine zweite Umwälzpumpe 412.

Wie in Fig. 4 ersichtlich ist, kann dem Gesamtsystem über das Zulaufmagnetventil 409 und die wassertechnische Sicherungseinrichtung 405 Wasser zugeführt werden, wobei dieses Wasser dem Wärmetauscher 411 zugeführt wird.

Über die Umwälzpumpe 410 wird dieses Wasser im Gegenstrom durch den Plattenwärmetauscher 402 der Wärmepumpe gedrückt und fließt dann wieder zurück in den Wärmetauscher 411.

Der Wärmetauscher 411 dient einerseits dazu, das Wasser, welches durch den Plattenwärmetauscher 402 zirkuliert und erhitzt wird, zu bevorraten. Andererseits dient der Wärmetauscher 411 dazu, die aufgenommene Wärme über die integrierte Wärmetauscherspirale an das über eine zweite Umwälzpumpe 412 zirkulierende Tankwasser abzugeben.

Wird nun während des Spülvorganges beispielsweise eine Nachspülung angefordert, wird heißes Wasser aus dem Boiler 406 über die Nachspülpumpe 408 auf das Spülgut gebracht.

Der Boiler 406, der über das Wasserniveau geregelt ist, fordert dann wieder neues Wasser an. Dieses fließt über das Magnetventil 409 und die wassertechnische Sicherungseinheit 405 in den Wärmetauscher 411 fließt, wobei erwärmtes Wasser in den Boiler 406 gedrückt wird, bis dieser wieder gefüllt ist.

Der Kältemittelkreislauf ist wie ein herkömmlicher Kältemittelkreislauf aufgebaut und umfasst einen Verdichter 401, einen Kondensator 402, einen Verdampfer 404 und ein Expansionsventil 403. Der Verdampfer entzieht der Abluft und/oder der Umgebungsluft die Energie und kühlt, und somit entfeuchtet, diese Luft.

Bei dieser Ausführungsform ist der Kondensator 402 als Plattenwärmetauscher aufgebaut. Er erwärmt das Frischwasser, welches einerseits das Nachspülwasser darstellt und andererseits das Tankwasser über den Wärmetauscher 411 erwärmt.

Ferner umfasst die in Fig. 4 gezeigte Ausführungsform optional einen Temperatursensor 502 und einen Feuchtigkeitssensor 504, die die Temperatur der Abluft und/oder die absolute und/oder die relative Feuchtigkeit der Abluft, die wieder an die Umgebung abgegeben wird, messen können.

Basierend auf ein oder mehreren der Messwerte mindestens eines solchen Sensors oder basierend auf zeitlichen Veränderungen der Messwerte können das Verfahren und die Vorrichtung speziell an die entsprechenden Gegebenheiten angepasst werden, insbesondere kann in Abhängigkeit von solchen Messwerten die Umschalt- oder Einstellklappe bzw. die Umschalt- oder Regelungsvorrichtung gesteuert werden, um ein optimales Ergebnis zu erzielen.

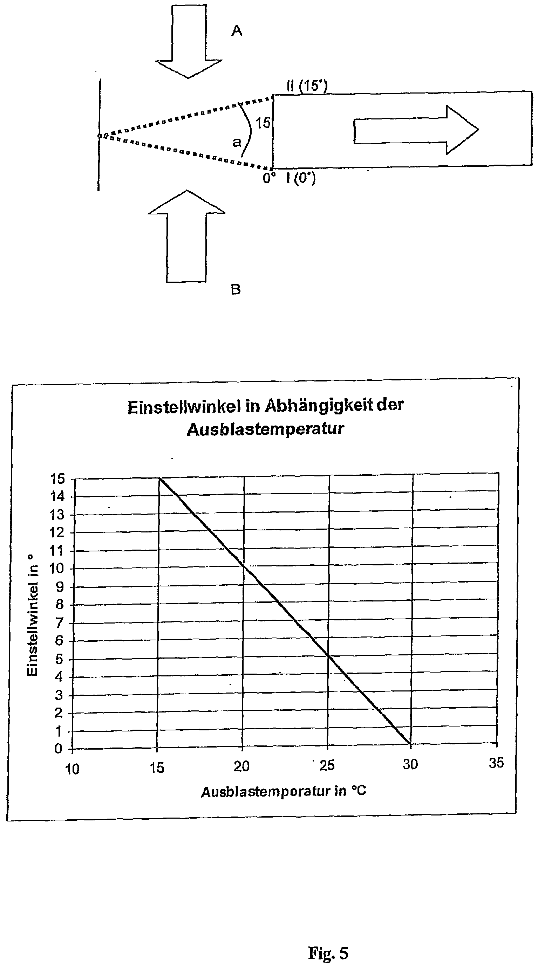

Fig. 5 zeigt schematisch einen Ausschnitt einer Ausführungsform eines Programmautomaten, wie er beispielsweise in Fig. 3 gezeigt ist. Dieser weist eine Umschalt- oder Einstellklappe 311 auf, die zwischen zwei Positionen I und II und mit beliebigen Zwischenpositionen einstellbar ist, wobei diese Umschalt- oder Einstellklappe 311 über einen Winkelbereich gegenüber der Stellung I definiert werden kann und enstpechend einstellbar ist. Im dargestellten Beispiel beträgt der Winkelbereich das Intervall von 0° bis 15°; es versteht sich, dass der Bereich alternativ vollkommen analog durch andere Winkel oder eine andere Nullstellung (beisipelsweise eine mittlere Stellung) festgelegt sein kann.

Bei einer Einstellung von 0° (Stellung I) wird im dargestellten Beispiel, wie durch den Pfeil A angezeigt, lediglich Luft und/oder Wrasen aus der Umgebung angesaugt. Demgegenüber wird in der anderen Stellung, Stellung II (die gegenüber der Stellung I um 15° geschwenkt ist), wie durch den Pfeil B angezeigt, lediglich Luft aus dem Spülraum angesaugt wird.

Die Tabelle zeigt eine Möglichkeit, den Einstellwinkel der Klappe 311 in Abhängigkeit von der Ausblastemperatur einzustellen. Bei Temperaturen unterhalb einer Ausblastemperatur von 15°C wird dabei die Klappe in der Stellung II (also um 15° gegenüber der Stellung I geschwenkt) eingestellt, wohingegen die Klappe 311 bei Temperaturen oberhalb von 30°C in der Stellung I (bei nicht, also um 0° geschwenkter Klappe) ist. Bei höheren Ausblastemperaturen wird daher mehr Luft aus der Umgebung beigemischt, während bei niedrigeren Temperaturen mehr Luft/Wrasen aus der Spülzone beigemischt wird. So kann die gewünschte Ausblastemperatur, beispielsweise zwischen 20°C und 25°C, insbesondere 20°C bis 23°C, eingestellt werden. Auch kann bei einer anderen bevorzugten Ausführungsform des Programmautomaten und/oder bei einem besonders bevorzugten Verfahren eine Steuerung vorgenommen werden, die zumindest über weite Zeiträume sicherstellt, dass sich die Abluft in oder in der Nähe der sogenannten "thermischen Behaglichkeit" befindet (DIN 1946).

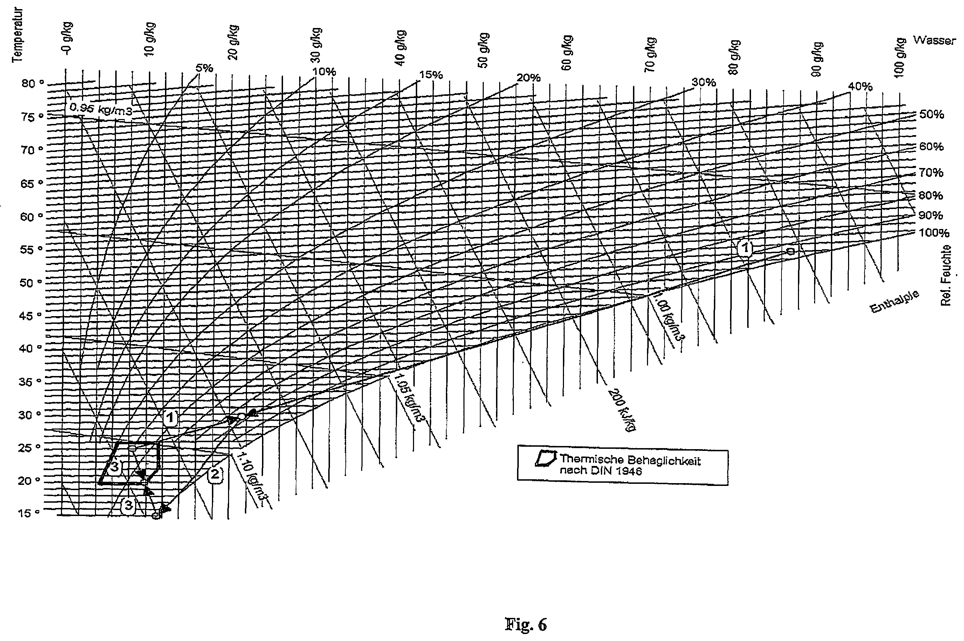

Fig. 6 zeigt ein Mollierdiagramm und ein Beispiel für eine Behandlung von Luftströmen:

In einem ersten Schritt, siehe Pfeil (1), wird ein Luftstrom 1 aus warmer und feuchter Luft bzw. Wrasen aus dem Spülraum mit einem Luftstrom 2 gemischt, der kühle Luft aus der Umgebung enthält. Wie durch die Pfeile (1) in dem beigefügten Mollierdiagramm angegeben, entsteht hierdurch eine Mischluft.

In einem zweiten Schritt wird die Mischluft gekühlt, siehe Pfeil (2).

In einem dritten Schritt wird die so gekühlte Luft wiederum mit kühler Luft (aus der Umgebung) gemischt, siehe Pfeil (3), so dass eine Mischluft entsteht, die an die Umgebung abgegeben wird.

Beispielhafte relevante Werte für die oben beschriebenen Luftströme können der nachfolgenden Tabelle entnommen werden:

| 1) Mischen von 2 Luftmengen | | | | |
|---|---|---|---|---|
| | | Luftstrom 1 | Luftstrom 2 | Mischluft |
| Temperatur | °C | 50.000 | 25.000 | 29.653 |
| Rel. Feuchte | % | 95.000 | 40.000 | 76.558 |
| Abs. Feuchte | g/kg | 87.102 | 8.387 | 21.506 |
| Dichte feucht | kg/m³ | 0.976 | 1.104 | 1.079 |
| Enthalpie feucht Volumenstrom | kJ/kg | 276.200 | 46.521 | 84.801 |
| feucht Massenstrom | m³/h | 22.267 | 91.322 | 113.611 |
| trocken | kg/h | 20.000 | 100.000 | 120.000 |

| 2) Kühlung der Luft | | | | |
|---|---|---|---|---|
| | | Luft ein | Luft aus | |
| Temperatur | °C | 29.653 | 15.000 | |
| Rel. Feuchte | % | 76.558 | 100.000 | |
| Abs. Feuchte | g/kg | 21.506 | 11.357 | |
| Dichte feucht | kg/m³ | 1.079 | 1.141 | |
| Enthalpie feucht Volumenstrom | kJ/kg | 84.801 | 43.808 | |
| feucht Massenstrom | m³/h | 113.611 | 106.409 | |
| trocken | kg/h | 120.000 | 120.000 | |
| Kondensatmenge | kg/h | | 1.218 | |

| 3) Mischen von 2 Luftmengen | | | | |
|---|---|---|---|---|
| | | Luftstrom 1 | Luftstrom 2 | Mischluft |
| Temperatur | °C | 15.000 | 25.000 | 19.987 |
| Rel. Feuchte | % | 100.000 | 40.000 | 63.647 |
| Abs. Feuchte | g/kg | 11.357 | 8.387 | 9.872 |
| Dichte feucht | kg/m³ | 1.141 | 1.104 | 1.122 |
| Enthalpie feucht Volumenstrom | kJ/kg | 43.808 | 46.521 | 45.164 |
| feucht Massenstrom | m³/h | 106.409 | 109.586 | 215.994 |
| trocken | kg/h | 120.000 | 120.000 | 240.000 |

Wie in dem beigefügten Mollierdiagramm ersichtlich ist, befindet sich die Mischluft, die nach dem Vorgang (3) an die Umgebung abgegeben wird, in einem Bereich der sogenannten "thermischen Behaglichkeit", siehe DIN1946.

Durch die Anpassung eines erfindungsgemäßen Verfahrens und die Steuerung einer erfindungsgemäßen Vorrichtung kann daher, wie oben bereits erläutert, das Raumklima auf besonders vorteilhafte Weise in den gewünschten Bereichen gehalten werden, so dass insbesondere eine thermische Behaglichkeit sichergestellt wird. Die Effektivität und die Lebensdauer einer Wärmepumpe werden dabei deutlich erhöht.

Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Verfahren zum Spülen von Spülgut in einer Spülzone eines Programmautomaten (101), der eine Wärmepumpenvorrichtung (102) aufweist, **dadurch gekennzeichnet,**
**dass** das Verfahren mindestens zwei Spülvorgänge umfasst, die von mindestens einem dazwischenliegenden Unterbrechungszeitraum zum manuellen Eingeben des Spülguts in die Spülzone und/oder zum Entnehmen des Spülguts aus der Spülzone unterbrochen sind,
wobei die Wärmepumpenvorrichtung kontinuierlich über einen Betriebszeitraum hinweg betrieben wird, der die mindestens zwei Spülvorgänge und den mindestens einen Unterbrechungszeitraum umfasst,
und wobei während mindestens eines Teils des Unterbrechungszeitraums entsprechend einer Einstellung einer Umschalt- oder Regelungsvorrichtung (311) Luft und/oder Wrasen aus der Spülzone und/oder Luft aus der Umgebung des Programmautomaten angesaugt und der Wärmepumpenvorrichtung zugeführt wird.

2. Verfahren nach Anspruch 1, wobei die Einstellung der Umschalt- oder Regelungsvorrichtung in Abhängigkeit von
einem Spülprogramm,
einer Temperatur in einer Umgebung des Programmautomaten,
einer absoluten oder relativen Luftfeuchtigkeit in einer Umgebung des Programmautomaten,
einer Ausblastemperatur,
einem relativen und/oder absoluten Feuchtigkeitsgehalt einer Abluft des Programmautomaten
und/oder in Abhängigkeit davon bestimmt und gesteuert wird, ob die Spülzone geöffnet oder geschlossen ist und/oder leer oder beladen.

3. Verfahren nach Anspruch 1 oder 2, wobei die Einstellung der Umschalt- oder Regelungsvorrichtung während des Betriebszeitraums einmal oder mehrere Male geändert und so ein Anteil an Umgebungsluft in der angesaugten und der Wärmepumpe zugeführten Luft bzw. dem Luft-Wrasen-Gemisch variiert wird,
wobei bevorzugt der Wärmepumpenvorrichtung während des Zeitraums eines Trocknungsprozesses innerhalb eines Spülvorganges Luft und/oder Wrasen aus der Spülzone zugeführt wird,
und/oder wobei der Wärmepumpenvorrichtung während eines oder mehrerer Spülprozesse innerhalb eines Spülvorganges Luft aus einem Umgebungsbereich des Programmautomaten zugeführt wird.

4. Verfahren nach Anspruch 3, wobei die Änderung der Einstellung der Umschalt- oder Regelungsvorrichtung so erfolgt, dass mit steigender Ausblastemperatur der Anteil der Luft aus der Umgebung des Programmautomaten erhöht wird oder sogar ausschließlich Luft aus der Umgebung des Programmautomaten angesaugt und der Wärmepumpenvorrichtung zugeführt wird.

5. Verfahren nach einem der vorhergehenden Ansprüche, wobei innerhalb des Unterbrechungszeitraums für eine festgelegte Zeitdauer t₁ > 0 ab der Beendigung eines vorangegangenen Spülvorgangs weiterhin Luft und/oder Wrasen aus der Spülzone und/oder aus der Umgebung des Programmautomaten angesaugt und der Wärmepumpenvorrichtung zugeführt werden/ wird.

6. Verfahren gemäß Anspruch 5, wobei automatisch erfasst wird, ob die Spülzone geöffnet wird oder ist, und wobei bei geöffneter Spülzone während der festgelegten Zeitdauer t₁
die Einstellung der Umschalt- oder Regelungsvorrichtung so erfolgt, dass sowohl Luft aus der Spülzone als auch Luft aus der Umgebung des Programmautomaten angesaugt und der Wärmepumpenvorrichtung zugeführt wird und/oder
eine Saugleistung einer Ansaugvorrichtung erhöht wird, mit der die Luft und/oder der Wrasen aus der Spülzone angesaugt und der Wärmepumpenvorrichtung zugeführt werden.

7. Verfahren gemäß Anspruch 5 oder 6, wobei die Zeitdauer t₁ in Abhängigkeit von einer Umgebungstemperatur, von einer relativen oder absoluten Feuchtigkeit der Umgebungsluft, von einem gewählten Spülprogramm und/oder davon festgelegt wird, ob die Spülkammer geöffnet oder geschlossen ist und/oder leer oder beladen.

8. Programmautomat (101) zum Spülen von Spülgut, insbesondere nach einem Verfahren gemäß einem der vorhergehenden Ansprüche, wobei der Programmautomat eine Spülzone zur Aufnahme von zu reinigendem Spülgut aufweist und eine Wärmepumpenvorrichtung (102) umfasst, die so ausgebildet ist, dass ihr Luft und/oder Wrasen aus der Spülzone und/oder Luft aus dem Umgebungsbereich des Programmautomaten zugeführt werden kann,
wobei der Programmautomat eine Umschalt- oder Regelungsvorrichtung (311) umfasst, die in mindestens zwei Betriebsstellungen (I, II) eingestellt werden kann, wobei die Umschalt- oder Regelungsvorrichtung so ausgebildet ist, dass in einer ersten Betriebstellung Luft und/oder Wrasen aus der Spülzone angesaugt und der Wärmepumpenvorrichtung zugeführt wird und in einer zweiten Betriebsstellung Luft aus dem Umgebungsbereich des Programmautomaten angesaugt und der Wärmepumpenvorrichtung zugeführt wird, **dadurch gekennzeichnet, dass**
die Wärmepumpenvorrichtung so ausgebildet ist, dass sie kontinuierlich über mehrere Spülvorgänge des Programmautomaten und über mindestens einen, zwischen je zwei Spülvorgängen liegenden Unterbrechungszeitraum zum manuellen Eingeben von Spülgut in die Spülzone und/oder zum manuellen Entnehmen von Spülgut aus der Spülzone betrieben wird.

9. Programmautomat gemäß Anspruch 8, der eine Steuerung umfasst, die die Umschaltvorrichtung automatisch steuert, wobei die Steuerung bevorzugt dazu eingerichtet ist, die Umschalt- oder Regelungsvorrichtung in Abhängigkeit von
einem Spülprogramm,
einer Temperatur in einer Umgebung des Programmautomaten,
einer absoluten oder relativen Luftfeuchtigkeit in einer Umgebung des Programmautomaten,
einer Ausblastemperatur,
einem relativen und/oder absoluten Feuchtigkeitsgehalt einer Abluft des Programmautomaten
und/oder davon einzustellen, ob die Spülzone geöffnet oder geschlossen ist und/oder leer oder beladen.

10. Programmautomat gemäß Anspruch 9, wobei die Steuerung dazu eingerichtet ist, die Einstellung der Umschalt- oder Regelungsvorrichtung (311) während des Betriebszeitraums einmal oder mehrere Male zu ändern und so einen Anteil an Umgebungsluft in der angesaugten und der Wärmepumpe zugeführten Luft bzw. dem Luft-Wrasen-Gemisch zu variieren.

11. Programmautomat gemäß einem der Ansprüche 9 bis 10, wobei die Steuerung dazu eingerichtet ist, die Umschalt- oder Regelungsvorrichtung so einzustellen, dass innerhalb des Unterbrechungszeitraums für eine festgelegte Zeitdauer t₁ > 0 ab der Beendigung eines vorangegangenen Spülvorgangs weiterhin Luft und/oder Wrasen aus der Spülzone und/oder aus der Umgebung des Programmautomaten angesaugt und der Wärmepumpenvorrichtung zugeführt werden/ wird.

12. Programmautomat gemäß Anspruch 11, der Sensoren aufweist, die erfassen, ob die Spülzone geöffnet ist, und wobei die Steuerung dazu eingerichtet ist, bei geöffneter Spülzone während der festgelegten Zeitdauer t₁
die Umschalt- oder Regelungsvorrichtung so einzustellen, dass sowohl Luft aus der Spülzone als auch Luft aus der Umgebung des Programmautomaten angesaugt und der Wärmepumpenvorrichtung zugeführt wird und/oder
dass eine Saugleistung einer Ansaugvorrichtung erhöht wird, mit der die Luft und/oder der Wrasen aus der Spülzone angesaugt und der Wärmepumpenvorrichtung zugeführt werden

13. Programmautomat nach einem der Ansprüche 8 bis 12, wobei die Umschalt- oder Regelungsvorrichtung ferner eine oder mehrere Zwischenstellungen zwischen der ersten Betriebsstellung und der zweiten Betriebsstellung aufweist oder zwischen der ersten und der zweiten Betriebsstellung frei einstellbar ist, so dass ein Gemisch aus Luft und/oder Wrasen aus der Spülzone und Luft aus dem Umgebungsbereich des Programmautomaten angesaugt und der Wärmepumpenvorrichtung zugeführt werden kann.

14. Programmautomat nach einem der Ansprüche 8 bis 13, wobei die Umschalt- oder Regelungsvorrichtung eine Umschalt- oder Einstellklappe (311) umfasst, die steuerbar ist und mindestens zwei Stellungen (I, II) einnehmen kann, wobei in einer ersten Stellung Luft und/oder Wrasen aus der Spülzone angesaugt und der Wärmepumpenvorrichtung zugeführt wird, während in einer zweiten Stellung Luft aus der Umgebung des Programmautomaten angesaugt und der Wärmepumpenvorrichtung zugeführt wird.

15. Programmautomat nach Anspruch 14, wobei die Umschalt- oder Einstellklappe mindestens eine Zwischenposition zwischen der ersten und der zweiten Stellung aufweist oder frei zwischen der ersten und der zweiten Stellung einstellbar ausgebildet ist.

## Claims

1. A method for washing items to be washed in a washing zone of a programmed machine (101) which has a heat pump device (102), **characterized in that**
the method comprises at least two washing cycles which are interrupted by at least one interruption time falling therebetween for manual introduction of the items to be washed into the washing zone and/or for removal of the items to be washed from the washing zone,
wherein the heat pump device is operated continuously over an operating period which comprises the at least two washing cycles and the at least one interruption time,
and wherein during at least one part of the interruption time corresponding to a setting of a switching or control device (311) air and/or waste steam from the washing zone and/or air from the environment of the programmed machine is drawn in and fed to the heat pump device.

2. The method according to claim 1, wherein the setting of the switching or control device is determined and controlled depending on
a washing program,
a temperature in an area surrounding the programmed machine,
an absolute or relative atmospheric humidity in an area surrounding the programmed machine,
a discharge temperature,
a relative and/or absolute moisture content of outlet air from the programmed machine
and/or depending on whether the washing zone is open or closed and/or empty or loaded.

3. The method according to claim 1 or 2, wherein the setting of the switching or control device during the operating period is changed once or several times and a fraction of ambient air in the air which is drawn in and the air or air/waste steam mixture which is fed to the heat pump is thereby varied,
wherein air and/or waste steam from the washing zone is preferably fed to the heat pump device during the period of a drying process,
and/or wherein air from an area surrounding the programmed machine is fed to the heat pump device during one or several washing processes within a washing cycle.

4. The method according to claim 3, wherein the change in setting of the switching or control device takes place in such a manner that as the discharge temperature increases, the fraction of air coming from the area surrounding the programmed machine is increased or air is even drawn in exclusively from the area surrounding the programmed machine and fed to the heat pump device.

5. The method according to one of the preceding claims, wherein within the interruption time for a defined period t₁ > 0 from the end of a preceding washing cycle, air and/or waste steam is/are drawn in from the washing zone and/or from the area surrounding the programmed machine and fed to the heat pump device.

6. The method according to claim 5, wherein it is automatically detected whether the washing zone is open or opened and wherein if the washing zone is open during the defined period t₁
the setting of the switching or control device takes place in such manner that both air from the washing zone and also air from the area surrounding the programmed machine is drawn in and fed to the heat pump device and/or
a throughput of a suction device is increased, with which the air and/or the waste steam from the washing zone are drawn in and fed to the heat pump device.

7. The method according to claim 5 or 6, wherein the period t₁ is determined depending on an ambient temperature, on a relative or absolute humidity of the ambient air, on a selected washing program and/or on whether the washing chamber is open or closed and/or empty or loaded.

8. A programmed machine (101) for washing items to be washed, in particular following a method according to one of the preceding claims, wherein the programmed machine has a washing zone for receiving items to be washed and comprises a heat pump device (102) which is configured in such a manner that its air and/or waste steam from the washing zone and/or air from the area surrounding the programmed machine can be supplied,
wherein the programmed machine comprises a switching or control device (311) which can be set in at least two operating settings (I, II), wherein the switching or control device is configured in such a manner that in a first operating setting air and/or waste steam are drawn from the washing zone and fed to the heat pump device and in a second operating setting air is drawn from the area surrounding the programmed machine and fed to the heat pump device, **characterized in that**
the heat pump device is configured in such a manner that it is continuously operated over several washing cycles of the programmed machine and over at least one interruption time falling between two washing cycles in each case for the manual introduction of items to be washed into the washing zone and/or for the manual removal of washed items from the washing zone.

9. A programmed machine according to claim 8 which comprises a control which automatically controls the switching device, wherein the control is preferably set up to set the switching or control device depending on
a washing programme,
a temperature in the area surrounding the programmed machine,
an absolute or relative atmospheric humidity in an area surrounding the programmed machine,
a discharge temperature,
a relative and/or absolute moisture content of outlet air from the programmed machine
and/or depending on whether the washing zone is open or closed and/or empty or loaded.

10. The programmed machine according to claim 9, wherein the control is set up to change the setting of the switching or control device (311) once or several times during the operating period and thereby vary a fraction of ambient air in the air which is drawn in and fed to the heat pump or the air/waste steam mixture.

11. The programmed machine according to one of claims 9 to 10, wherein the control is set up to set the switching or control device in such a manner that within the interruption time for a defined period t₁ > 0 from the end of a preceding washing cycle air and/or waste steam is/are still drawn from the washing zone and/or from the area surrounding the programmed machine and is/are fed to the heat pump device.

12. The programmed machine according to claim 11 which has sensors that detect whether the washing zone is open and wherein the control is set up, when the washing zone is open during the defined period t₁
to set the switching or control device in such a manner that both air from the washing zone and also air from the area surrounding the programmed machine is drawn in and fed to the heat pump device and/or
that a throughput of a suction device is increased, with which the air and/or the waste steam are drawn from the washing zone and fed to the heat pump device.

13. The programmed machine according to one of claims 8 to 12, wherein the switching or control device also has one or a plurality of intermediate settings between the first operating setting and the second operating setting or can be freely set between the first and the second operating settings, so that a mixture of air and/or waste steam from the washing zone and air from the area surrounding the programmed machine is drawn in and fed to the heat pump device.

14. The programmed machine according to one of claims 8 to 13, wherein the switching or control device comprises a switching or setting flap (311) which is controllable and may include at least two settings (I, II), wherein in a first setting air and/or waste steam are drawn in from the washing zone and fed to the heat pump device, while in a second setting air is drawn in from the area surrounding the programmed machine and fed to the heat pump device.

15. The programmed machine according to claim 14, wherein the switching or setting flap has at least one intermediate position between the first and the second setting or is designed so as to be freely settable between the first and the second setting.

## Revendications

1. Procédé de lavage d'articles à laver dans une zone de lavage d'une machine automatique à programme (101) qui présente un dispositif de pompe à chaleur (102),
**caractérisé en ce que**
le procédé comprend au moins deux processus de lavage qui sont interrompus par au moins une période d'interruption intermédiaire pour l'entrée manuelle des articles à laver dans la zone de lavage et/ou pour l'enlèvement des articles à laver de la zone de lavage,
le dispositif de pompe à chaleur étant mis en fonctionnement de façon continue pendant une période de fonctionnement qui comprend au moins deux processus de lavage et la période d'interruption au moins au nombre de un,
et dans lequel, pendant au moins une partie de la période d'interruption, conformément à un réglage d'un dispositif de commutation ou de régulation (311), de l'air et/ou des buées sont aspirés à partir de la zone de lavage et/ ou de l'air est aspiré à partir de l'environnement de la machine automatique à programme, et sont conduits au dispositif de pompe à chaleur.

2. Procédé selon la revendication 1, le réglage du dispositif de commutation ou de régulation étant déterminé et commandé en fonction
d'un programme de lavage,
d'une température dans un environnement de la machine automatique à programme,
d'une humidité absolue ou relative de l'air dans un environnement de la machine automatique à programme,
d'une température de soufflage,
d'une teneur en humidité relative et/ou absolue d'un air sortant de la machine automatique à programme,
et/ou selon que la zone de lavage est ouverte ou fermée et/ou est vide ou chargée.

3. Procédé selon la revendication 1 ou 2, le réglage du dispositif de commutation ou de régulation étant modifié une fois ou plusieurs fois pendant la période de fonctionnement, et ainsi une proportion de l'air ambiant dans l'air aspiré et conduit à la pompe à chaleur ou respectivement dans le mélange air-buées étant modifiée,
de l'air et/ou des buées étant de préférence conduits au dispositif de pompe à chaleur à partir de la zone de lavage pendant la période d'un processus de séchage à l'intérieur d'un processus de lavage,
et/ou de l'air étant conduit au dispositif de pompe à chaleur à partir d'une zone environnante de la machine automatique à programme pendant un ou plusieurs process de lavage à l'intérieur d'un processus de lavage.

4. Procédé selon la revendication 3, la modification du réglage du dispositif de commutation ou de régulation s'effectuant de telle sorte que, avec l'augmentation de la température de soufflage, la proportion de l'air en provenance de l'environnement de la machine automatique à programme est augmentée ou bien même de telle sorte que seul de l'air en provenance de l'environnement de la machine automatique à programme est aspiré et conduit au dispositif de pompe à chaleur.

5. Procédé selon l'une des revendications précédentes, dans lequel, à l'intérieur de la période d'interruption, pendant une durée fixée t₁ > 0 à compter l'achèvement d'un processus de lavage précédent, de l'air et/ou des buées continue(nt) à être aspiré(s) à partir de la zone de lavage et/ou à partir de l'environnement de la machine automatique à programme et à être conduit(s) au dispositif de pompe à chaleur.

6. Procédé selon la revendication 5, dans lequel il est détecté automatiquement si on ouvre la zone de lavage ou si celle-ci est ouverte, et dans lequel, si la zone de lavage est ouverte pendant la durée fixée t₁,
le réglage du dispositif de commutation ou de régulation s'effectue de telle sorte que, aussi bien de l'air en provenance de la zone de lavage que de l'air en provenance de l'environnement de la machine automatique à programme est aspiré et conduit au dispositif de pompe à chaleur et/ou une puissance d'aspiration d'un dispositif d'aspiration est augmentée, avec laquelle l'air et/ou les buées sont aspirés de la zone de lavage et conduits au dispositif de pompe à chaleur.

7. Procédé selon la revendication 5 ou 6, la durée t₁ étant fixée en fonction d'une température ambiante, d'une humidité relative ou absolue de l'air ambiant, d'un programme de lavage choisi ou selon que la chambre de lavage est ouverte ou fermée et/ou est vide ou chargée.

8. Machine automatique à programme (101) destinée au lavage d'articles à laver, en particulier suivant un procédé selon l'une des revendications précédentes, la machine automatique à programme présentant une zone de lavage pour la réception d'articles à laver à nettoyer et un dispositif de pompe à chaleur (102) qui est disposé de telle sorte que de l'air et/ou des buées en provenance de la zone de lavage et/ou de l'air en provenance de la zone environnante de la machine automatique à programme peuvent être conduits à ce dispositif,
la machine automatique à programme comprenant un dispositif de commutation ou de régulation (311) qui peut être réglé dans au moins deux positions de fonctionnement (I, II), le dispositif de commutation ou de régulation étant constitué de telle sorte que, dans une première position de fonctionnement, de l'air et/ou des buées sont aspirés à partir de la zone de lavage et conduits au dispositif de pompe à chaleur et, dans une deuxième position de fonctionnement, de l'air est aspiré à partir de la zone environnante de la machine automatique à programme et conduit au dispositif de pompe à chaleur, **caractérisée en ce que** le dispositif de pompe à chaleur est constitué de telle sorte qu'il est mis en fonctionnement de façon continue pendant plusieurs processus de lavage de la machine automatique à programme et pendant au moins une période d'interruption située entre respectivement deux processus de lavage pour l'entrée manuelle d'articles à laver dans la zone de lavage et/ou pour l'enlèvement manuel d'articles à laver de la zone de lavage.

9. Machine automatique à programme selon la revendication 8, qui comprend une commande qui commande automatiquement le dispositif de commutation, la commande étant de préférence aménagée pour régler le dispositif de commutation ou de régulation en fonction
d'un programme de lavage,
d'une température dans l'environnement de la machine automatique à programme,
d'une humidité absolue ou relative de l'air dans un environnement de la machine automatique à programme, d'une température de soufflage,
d'une teneur en humidité relative et/ou absolue d'un air sortant de la machine automatique à programme et/ou selon que la zone de lavage est ouverte ou fermée et/ou vide ou chargée.

10. Machine automatique à programme selon la revendication 9, la commande étant aménagée pour modifier une ou plusieurs fois le réglage du dispositif de commutation ou de régulation (311) pendant la période de fonctionnement et faire varier ainsi une proportion d'air ambiant dans l'air aspiré et conduit à la pompe à chaleur ou respectivement dans le mélange air-buées.

11. Machine automatique à programme selon l'une des revendications 9 à 10, la commande étant aménagée pour régler le dispositif de commutation ou de régulation de telle sorte que, à l'intérieur de la période d'interruption, pendant une durée fixée t₁ > 0 à compter de l'achèvement d'un processus de lavage précédent, de l'air et/ou des buées continue(nt) à être aspiré(s) à partir de la zone de lavage et/ou à partir de l'environnement de la machine automatique à programme et conduit(s) au dispositif de pompe à chaleur.

12. Machine automatique à programme selon la revendication 11, qui présente des capteurs qui détectent si la zone de lavage est ouverte, et la commande étant aménagée pour, pendant la durée fixée t₁ alors que la zone de lavage est ouverte,
régler le dispositif de commutation ou de régulation de telle sorte que aussi bien de l'air en provenance de la zone de lavage que de l'air en provenance de l'environnement de la machine automatique à programme est aspiré et conduit au dispositif de pompe à chaleur et/ ou
de telle sorte qu'une puissance d'aspiration d'un dispositif d'aspiration est augmentée, avec laquelle l'air et/ou les buées sont aspirés à partir de la zone de lavage et conduits au dispositif de pompe à chaleur.

13. Machine automatique à programme selon l'une des revendications 8 à 12, le dispositif de commutation ou de régulation présentant en outre une ou plusieurs positions intermédiaires entre la première position de fonctionnement et la deuxième position de fonctionnement ou pouvant être réglé librement entre la première et la deuxième position de fonctionnement de telle sorte qu'un mélange d'air et/ ou de buées peut être aspiré à partir de la zone de lavage et de telle sorte que de l'air peut être aspiré à partir de la zone environnante de la machine automatique à programme, et conduit au dispositif de pompe à chaleur.

14. Machine automatique à programme selon l'une des revendications 8 à 13, le dispositif de commutation ou de régulation comprenant un clapet de commutation ou de réglage (311) qui peut être commandé et qui peut adopter au moins deux positions (I, II), de l'air et/ou des buées étant, dans une première position, aspirés à partir de la zone de lavage et conduits au dispositif de pompe à chaleur tandis que, dans une deuxième position, de l'air est aspiré à partir de l'environnement de la machine automatique à programme et conduit au dispositif de pompe à chaleur.

15. Machine automatique à programme selon la revendication 14, le clapet de commutation ou de réglage présentant au moins une position intermédiaire entre la première et la deuxième position ou étant constitué de façon librement réglable entre la première et la deuxième position.
